# EUROPÄISCHE PATENTANMELDUNG

(11) **EP 4 223 717 A1**
(43) Veröffentlichungstag der Anmeldung: **09.08.2023**
(21) Anmeldenummer: 22215572.3
(22) Anmeldetag: 21.12.2022
(51) Int. Cl.: C03C 27/10, A01K 63/00, E06B 3/62

(54) **VITRINENANORDNUNG**

(30) Priorität: 02.02.2022 DE 202022100585 U
(71) Anmelder: Dumitru, Florin, 68163 Mannheim (DE); Dumitru, Christian, 60316 Frankfurt am Main (DE)
(72) Erfinder: Dumitru, Florin, 68163 Mannheim (DE); Dumitru, Christian, 60316 Frankfurt am Main (DE)
(74) Vertreter: Keil & Schaafhausen Patentanwälte PartGmbB

(57) **Zusammenfassung**

Die vorliegende Erfindung betrifft eine Vitrinenanordnung (1) mit wenigstens zwei Glasplatten (3), wobei die wenigstens zwei Glasplatten (3) durch eine Dichtanordnung (4) miteinander (5) verbunden sind.

Man möche eine Dichtanordnung vorschlagen, die einfach und flexibel montiert werden kann und einen guten Schutz bietet.

Hierzu ist vorgesehen, dass die Dichtanordnung (4) wenigstens ein Schnittschutzelement (5) aufweist.

## Beschreibung

Die vorliegende Erfindung betrifft eine Vitrinenanordnung mit wenigstens zwei Glasplatten, wobei die wenigstens zwei Glasplatten durch eine Dichtanordnung miteinander verbunden sind.

Bei bekannten Vitrinen werden die Glasplatten durch eine Dichtung miteinander verbunden. Dabei werden meistens Kanten bzw. Flächen von zwei benachbarten Glasplatten miteinander verbunden bzw. verklebt. Diese Dichtung kann jedoch relativ einfach von unbefugten Personen unsachgemäß aufgebrochen werden, so dass die Eckbereiche, an denen die zwei Glasplatten einer Vitrine miteinander verbunden sind, zusätzlich durch ein Profil gesichert sind. Das Profil schützt dabei die Dichtfuge der beiden Glasplatten und verhindert so, dass die Dichtung der beiden Glasplatten unsachgemäß beschädigt und damit aufgebrochen wird.

Durch den Einsatz des Profils wird ein Sichtfenster der Vitrine eingeschränkt, so dass das zu schützende Objekt nur noch durch einen kleineren Bereich betrachtet werden kann. Entsprechend führt der Einsatz von winkligen Profilen zu einer optischen Einschränkung, die es zu beheben gilt.

Weiterhin muss das Profil, im Allgemeinen ein Eckprofil, an den beiden zu verklebenden Glasplatten befestigt werden. Dies ist mit zahlreichen Arbeitsschritten verbunden, wie z.B. einlegen und kleben des Eckprofils an die Glasplatten. Außerdem muss bei der Montage des Eckprofils auf mögliche Winkelfehler der Vitrine Rücksicht genommen werden, so dass das Eckprofil entsprechend angepasst werden muss.

Es ist also Aufgabe der vorliegenden Erfindung, eine Dichtanordnung vorzugschlagen, die einfach und flexibel montiert werden kann und einen guten Schutz bietet.

Diese Aufgabe wird durch die Merkmale des Anspruchs 1 gelöst. Vorteilhafte Ausgestaltungen ergeben sich aus den Unteransprüchen.

Die Dichtanordnung weist wenigstens ein Schnittschutzelement auf. Durch das Schnittschutzelement wird ein Eindringen eines Aufbruchwerkzeuges wie beispielsweise einem Messer erschwert, so dass ein Einbrechender auf einen Widerstand stößt. Um den Widerstand zu überwinden, benötigt der Einbrechende mehr Zeit, die es wiederum Sicherheitspersonal oder Sicherheitssystemen erlaubt, Alarm zu schlagen und entsprechend einzugreifen. Entsprechend wird durch das wenigstens eine Schnittschutzelement ein guter Schutz erreicht.

Vorzugsweise weist die Dichtanordnung als eine Hauptkomponente Silikon auf. Silikon ist eine weit verbreitete Möglichkeit, Glasplatten einer Vitrine miteinander zu verbinden. Außerdem ist Silikon flexibel einsetzbar und es können mögliche auftretende Toleranzen durch Silikon ausgeglichen werden.

Vorzugsweise weist das wenigstens eine Schnittschutzelement als eine Hauptkomponente Glas, Kunststoff, Metall und/oder Sand auf. Je nach Einsatzzweck und Glasmaterial können verschiedene Hauptkomponenten bzw. Kombinationen verschiedener Hauptkomponenten eingesetzt werden. Durch den Einsatz von Glas und/oder Kunststoff kann eine transparente Dichtanordnung erreicht werden. Metall und/oder Sand weisen eine relativ hohe Härte auf, durch ein Einbruchswerkzeug abgestumpft werden kann. Entsprechend wird ein weiterer Einbruchsversuch durch das nun abgeschwächte, stumpfe Werkzeug erschwert.

Vorzugsweise weist das wenigstens eine Schnittschutzelement eine kugelige oder eine längliche Form auf. So können beispielsweise Glaskörper und/oder Kunststoffkörper eingesetzt werden, die eine kugelige bzw. runde Form aufweisen. Einem Sandkorn wird in der folgenden Beschreibung auch eine kugelige Form zugeschrieben. Auch können längliche Formen Verwendung finden, wie beispielsweise Glasfasern, Kunststofffasern, Metallspäne oder dergleichen. Eine Form des Schnittschutzelementes wird entsprechend der Gegebenheiten ausgewählt. Dies führt zu einer guten Flexibilität.

Vorzugsweise ist das wenigstens eine Schnittschutzelement ein Metalldraht. Der Metalldraht, der entlang der Dichtanordnung angeordnet wird, führt zu einem durchgehenden Schutzelement, das keine Lücken aufweist, die als mögliche Schwachstellen für den Einsatz von Aufbruchwerkzeugen genutzt werden können. Entsprechend wird durch den Einsatz von Metalldraht ein guter Schutz erreicht.

Vorzugsweise weist das wenigstens eine Schnittschutzelement einen Durchmesser ≤ 0,5 mm auf. Der Durchmesser bei Kugeln bezieht sich auf den Durchmesser der Kugel, wobei der Durchmesser einer länglichen Form sich auf eine Ausdehnung quer zur Längsachse der länglichen Form bezieht. Durch den gewählten Durchmesser ≤ 0,5 mm wird die Dichtanordnung mit ihrer Adhäsion und Kohäsion nicht beeinträchtigt, so dass durch den Einsatz des Schnittschutzelementes kein Abfall der Dichtigkeitswirkung der Dichtanordnung sowie der Klebewirkung der Dichtanordnung erreicht wird.

Vorzugsweise sind die wenigstens zwei Glasplatten im Bereich der Dichtanordnung lackiert. Durch die Lackierung kann zum einen beispielsweise eine Grundlage für die Anbringung der Dichtanordnung geschaffen werden. So können beispielsweise bei einem Ablängen der Glasplatten entstandene Schäden oder Ausflüsse bzw. Ausbrüche durch eine Lackierung behoben werden. Dadurch wird eine gute Verbindung der Dichtanordnung mit den Glasplatten erreicht. Dies führt zu einer guten Sicherheit bzw. einem guten Schutz.

Vorzugsweise weisen die wenigstens zwei Glasplatten im Bereich der Dichtanordnung einen Abstand ≥ 1 mm und ≤ 3 mm auf. Durch den Abstand kann die Dichtanordnung in ihrer eingebauten Form ihre vollen Adhäsions- und Kohäsionskräfte entfalten. Außerdem können durch den Abstand mögliche Toleranzen und Ungenauigkeiten ausgeglichen werden. Entsprechend ist die erfindungsgemäße Dichtanordnung flexibel einsetzbar.

Vorzugsweise ist das wenigstens eine Schnittschutzelement in der Dichtanordnung eingebettet. Durch die Einbettung des wenigstens einen Schnittschutzelementes in der Dichtanordnung wird eine zufällige Verteilung und Anordnung des Schnittschutzelementes innerhalb der Dichtanordnung erreicht, so dass es keine systematischen Schwachstellen gibt. Weiterhin wird das Schnittschutzelement von der Dichtanordnung umgeben, so dass mögliche atmosphärische Einflüsse, wie beispielsweise Sauerstoffzufuhr oder Feuchtigkeit nicht zu einem frühzeitigen Versagen des Schnittschutzelementes führen. Folglich wird eine Dichtanordnung mit einem langlebigen Schnittschutzelement erreicht.

Im Folgenden wird die Erfindung anhand eines bevorzugten Ausführungsbeispiels in Verbindung mit der Zeichnung beschrieben. Hierin zeigen:
- Fig. 1: eine schematische Darstellung einer Vitrine;
- Fig. 2: eine schematische Darstellung einer geschnittenen Eckverbindung mit einer erfindungsgemäßen Dichtanordnung eines ersten Ausführungsbeispiels;
- Fig. 3: eine schematische Darstellung einer geschnittenen Eckverbindung mit einer erfindungsgemäßen Dichtanordnung eines zweiten Ausführungsbeispiels;
- Fig. 4: eine schematische Darstellung einer geschnittenen Dichtanordnung mit einem Schnittschutzelement eines dritten Ausführungsbeispiels.

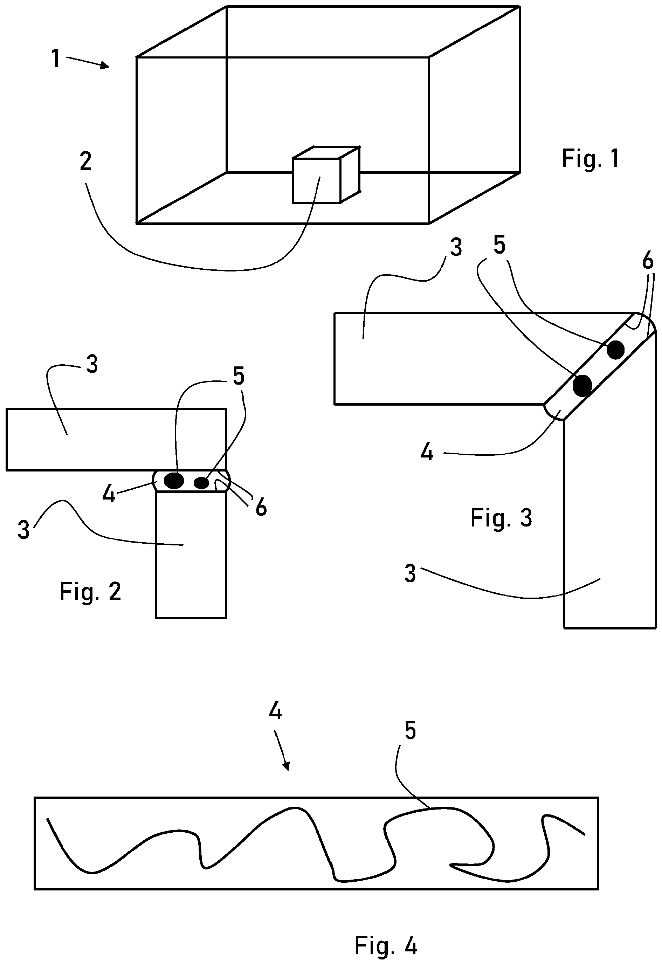

Fig. 1 zeigt eine Vitrine 1, in der ein zu schützendes Objekt 2 angeordnet ist. Die Vitrine 1 weist einen Deckel und vier Seitenteile auf, die jeweils aus einer Glasplatte bestehen. Die Glasplatten weisen als Hauptkomponente ein transparentes Material auf. Je nach Vitrinenart kann auch der Boden als Glasplatte ausgeführt sein, so dass dieser als Hauptkomponente ein transparentes bzw. durchsichtiges Material aufweist. Die Glasplatten sind dabei durch eine Dichtanordnung miteinander verbunden.

Fig. 2 zeigt zwei Glasplatten 3, wobei die Glasplatten 3 winklig zueinander angeordnet sind. Zwischen den Glasplatten 3 ist eine Dichtanordnung 4 angeordnet, in der Schnittschutzelemente 5 vorgesehen sind. Zwischen den Glasplatten 3 und der Dichtanordnung 4 ist jeweils eine Lackschicht 6 angeordnet. Die Glasplatten 3 sind dabei zwischen 1 mm und 3 mm voneinander beabstandet. Dabei wird der Abstand senkrecht zu den jeweiligen Dichtflächen gemessen. Entsprechend stark ist die Dichtanordnung 4 ausgeführt.

In Fig. 3 sind ebenfalls zwei Glasplatten 3 durch eine Dichtanordnung 4 miteinander verbunden. Dabei sind die Flächen der Glasplatten 3, die mit der Dichtanordnung 4 verbunden sind, mit einer Lackschicht 6 versehen. Innerhalb der Dichtanordnung 4 sind Schnittschutzelemente 5 angeordnet und von der Dichtanordnung 4 komplett umgeben.

Fig. 4 zeigt eine Dichtanordnung 4, die entlang einer Dichtfläche geschnitten wurde. Innerhalb der Dichtanordnung 4 ist ein Schnittschutzelement 5 angeordnet, das im vorliegenden Ausführungsbeispiel einen Metalldraht 5 aufweist.

Das Schnittschutzelement 5 kann als Hauptkomponente Glas, Kunststoff, Metall und/oder Sand aufweisen. Je nach Hauptkomponente kann das Schnittschutzelement 5 weiter verschiedene Formen aufweisen. So kann das Schnittschutzelement 5 beispielsweise eine kugelige Form aufweisen, wobei ein Sandkorn auch als kugelige Form betrachtet wird. Alternativ dazu können auch längliche Formen der Schnittschutzelemente 5 Verwendung finden. Entsprechend können Glasfasern, Kunststofffasern, Metallfasern oder Späne verwendet werden. Unabhängig der Form des Schnittschutzelementes 5 sollte das Schnittschutzelement 5 einen Durchmesser ≤ 0,5 mm aufweisen. Der Durchmesser bei einer länglichen Form bezieht sich dabei auf Abmessungen senkrecht zu einer Längsachse dieser Form.

Die Dichtanordnung 4 kann als eine Hauptkomponente beispielsweise Silikon aufweisen.

Im Rahmen der Montage kann das Schnittschutzelement 5 direkt in der Dichtanordnung 4 verarbeitet werden. Dafür wird das Schnittschutzelement 5 mit der Dichtanordnung 4 vermischt, bevor die Dichtanordnung 4 samt Schnittschutzelement 5 auf die entsprechenden Flächen der Glasplatten 3 aufgebracht wird. Alternativ dazu kann zunächst auf eine entsprechende Fläche der Glasplatten 3 Silikon aufgebracht werden. Anschließend wird das Schnittschutzelement 5 an dem Silikon angeordnet und ggfs. in das Silikon eingetaucht.

Die entsprechenden Flächen der Glasplatten 3 werden, wie zuvor beschrieben, mit einer Lackschicht 6 versehen, bevor die Dichtanordnung 4 angebracht wird.

Durch die Schnittschutzelemente 5 innerhalb der Dichtanordnung 4 wird ein Eindringen beispielsweise eines nicht dargestellten Messers oder dergleichen durch die Dichtanordnung 4 erschwert. Entsprechend bleibt vorhandenen Sicherheitssystemen und Sicherheitspersonal etwas mehr Zeit, um entsprechende Maßnahmen zu ergreifen, damit der Einbruchsversuch gestoppt werden kann.

### Bezugszeichenliste

- 1: Vitrine
- 2: zu schützendes Objekt
- 3: Glasplatte
- 4: Dichtanordnung
- 5: Schnittschutzelement
- 6: Lackschicht

## Patentansprüche

1. Vitrinenanordnung (1) mit wenigstens zwei Glasplatten (3), wobei die wenigstens zwei Glasplatten (3) durch eine Dichtanordnung (4) miteinander verbunden sind, **dadurch gekennzeichnet, dass** die Dichtanordnung (4) wenigstens ein Schnittschutzelement (5) aufweist.

2. Vitrinenanordnung (1) nach Anspruch 1, **dadurch gekennzeichnet, dass** die Dichtanordnung (4) als eine Hauptkomponente Silikon aufweist.

3. Vitrinenanordnung (1) nach Anspruch 1 oder 2, **dadurch gekennzeichnet, dass** das wenigstens eine Schnittschutzelement (5) als eine Hauptkomponente Glas, Kunststoff, Metall und/oder Sand aufweist.

4. Vitrinenanordnung (1) nach einem der Ansprüche 1 bis 3, **dadurch gekennzeichnet, dass** das wenigstens eine Schnittschutzelement (5) eine kugelige Form oder eine längliche Form aufweisen.

5. Vitrinenanordnung (1) nach einem der Ansprüche 1 bis 4, **dadurch gekennzeichnet, dass** das wenigstens eine Schnittschutzelement (5) ein Metalldraht ist.

6. Vitrinenanordnung (1) nach einem der Ansprüche 1 bis 5, **dadurch gekennzeichnet, dass** das wenigstens eine Schnittschutzelement (5) einen Durchmesser kleiner-gleich 0,5 mm aufweist.

7. Vitrinenanordnung (1) nach einem der Ansprüche 1 bis 6, **dadurch gekennzeichnet, dass** die wenigstens zwei Glasplatten (3) im Bereich der Dichtanordnung (4) lackiert sind.

8. Vitrinenanordnung (1) nach einem der Ansprüche 1 bis 7, **dadurch gekennzeichnet, dass** die wenigstens zwei Glasplatten (3) im Bereich der Dichtanordnung (4) einen Abstand größer-gleich 1 mm und kleiner-gleich 3 mm aufweisen.

9. Vitrinenanordnung (1) nach einem der Ansprüche 1 bis 8, **dadurch gekennzeichnet, dass** das wenigstens eine Schnittschutzelement (5) in der Dichtanordnung (4) eingebettet ist.
